# EUROPEAN PATENT SPECIFICATION

(11) **EP 4 344 587 B1**
(45) Date of publication and mention of the grant of the patent: **04.03.2026**
(21) Application number: 23197830.5
(22) Date of filing: 18.09.2023
(51) Int. Cl.: A47G 29/14, G06Q 10/08, G06Q 10/0836

(54) **LOCKER SYSTEM CAPABLE OF DYNAMICALLY GENERATING STORAGE SPACE BASED ON OBJECT VOLUME AND AN OPERATION METHOD THEREOF**
SCHLIESSFACHSYSTEM MIT DYNAMISCHER ERZEUGUNG VON SPEICHERPLATZ AUF BASIS EINES OBJEKTVOLUMENS UND BETRIEBSVERFAHREN DAFÜR
SYSTÈME DE CASIER CAPABLE DE GÉNÉRER DYNAMIQUEMENT UN ESPACE DE STOCKAGE SUR LA BASE D'UN VOLUME D'OBJET ET SON PROCÉDÉ DE FONCTIONNEMENT

(30) Priority: 29.09.2022 TW 111136939
(43) Date of publication of application: 03.04.2024
(73) Proprietor: Chang, Kai-Chieh, 100 Taipei City (TW)
(72) Inventor: Chang, Kai-Chieh, 100 Taipei City (TW)
(74) Representative: Lang, Christian

(56) References cited:
- CN-A- 106 724 061
- CN-U- 205 582 133
- TW-A- 202 014 128
- US-A1- 2017 164 735
- US-A1- 2019 281 979

## Description

### BACKGROUND OF THE INVENTION

### 1. Field of the Invention

The present invention relates to a smart locker system and an operation method thereof, and more particularly to a locker system capable of dynamically generating a storage space based on an object volume, and an operation method thereof.

### 2. Description of the Related Art

In recent years, with the popularity and vigorous development of the logistics industry, how to efficiently use storage spaces (also known as spaces of the locker system) has become one of the issues that various manufacturers are eager to solve.

Generally speaking, a conventional locker system uses pre-fixed storage spaces, and a stored object smaller than the size of the storage space can be placed in the storage space. However, this conventional locker system is difficult to effectively utilize the storage spaces. For example, when there is no smaller storage space, the stored object with a small size must be placed in an overly large storage space, so there is a problem of poor space utilization rate.

In view of this problem, some manufacturers have proposed technical means to change storage space; the proposed technical means is to control a shelf to adjust the sizes of the section spaces of the cabinet by a complex mechanism. Conventional designs are known, for example, from documents CN 205582133 U, CN 106724061 A and US 2019/281979 A1. Among them, document CN 205582133 U relates to an adjustable type of cabinet inner space intelligence express delivery cabinet, equipped with a plurality of rectangle recesses on the cabinet body, equal fixed mounting having a plurality of curb plates on the two vertical lateral walls of every rectangle recess, an equidistant setting of a plurality of curb plates on the same vertical lateral wall, and with another vertical lateral wall on the curb plate one -to -one, wherein the cabinet door rotates and installs between upper and lower two adjacent curb plates, installing the electronic lock on every cabinet door, being equipped with an independent switch on the electronic lock, the electronic lock being connected with a controller electricity, curb plate on two upper and lower adjacent horizontal planes, storing unit check of two vertical lateral walls and cabinet door constitutions, wherein, when two or two above storing unit lattices became a locker, with locker equal demountable installation baffle on the curb plate on the horizontal plane of below on the curb plate on the horizontal plane of locker the top, connecting piece fixed connection was crossed to two adjacent cabinet gate opens. The disclosed design can nimble regulator cubicle body storing space size and express delivery cabinet body size. However, this method requires the installation of a dividing plate above and below the cabinet when forming a storage cabinet; in other words, there will be two dividing plates between two adjacent storage cabinets, and they cannot share a single dividing plate, leading to higher costs. Document CN205582133 U discloses locker systems according to the preambles of claims 1,5 and discloses methods according to the preambles of claims 6,10. Document CN 106724061 A discloses an express delivery cabinet and cabinet method of adjustment of a kind of dynamic adjustment cabinet, comprising many sub-cabinets in a big female cabinet, every sub-cabinet including an electronic lock, the electronic lock being connected with a control unit, and a cabinet inner transverse dividing plate is ambulatory splint and is fixedly attached to a stringer board, it is easy to dismounted, and a control module sets sub-cabinet electronic lock to be combined and synchronously uses when sub-cabinet merges, data after the adjustment of system record storage, set new cabinet numbering; the control module sets sub-cabinet multiple electronic lock to be split and is used alone when sub-cabinet splits, and data after the adjustment of system record storage set new cabinet numbering. The size of the express delivery cabinet neutron cabinet can be adjusted arbitrarily as needed, make full use of cabinet resource, improve use value. However, if a first diaphragm does not exist and it is wanted to merge sub-cabinets B2 and C2, since only the electronic locks of B2 and C2 are opened, only a second diaphragm can be removed, but the electronic lock of sub-cabinet A2 is not opened, so the first diaphragm cannot be added, preventing the formation of a new sub-cabinet BC2. Similarly, if it is aimed to merge other sub-cabinets G2 and H2, since only the electronic locks of G2 and H2 are opened, it is impossible to add a diaphragm between sub-cabinets F2 and G2 to form a new sub-cabinet GH2. Therefore, the dynamic adjustment method of document CN 106724061 A is actually subject to many limitations. Finally, document US 2019/281979 A1 teaches a smart locker storage unit with compartments of adjustable size including a housing and at least one detachable shelf assembly. The detachable shelf assembly in the housing interior space includes at least one shelf support, a detachable shelf, and at least one shelf lock. The shelf support is secured to the housing. The detachable shelf divides the housing interior space into a plurality of adjustably-sized compartments. The shelf lock is mounted on the shelf support. When the shelf lock is in a locked position, the shelf lock secures the detachable shelf on the shelf support. When the shelf lock is in an unlocked position, the shelf lock allows disengagement of the detachable shelf. However, the mechanism of the detachable shelf assembly is complex, having both shelf locks. Also the shelf lock has a complex structure. Therefore, the design shown in document US 2019/281979 A1 needs to use a complex mechanism to control the layers to adjust the size of the cabinet space, the complex mechanism causing a great increase in the overall volume, weight, and cost, and also causes higher failure rate and maintenance inconvenience. Based on the various issues existing in the above-described prior art, the problem of poor space utilization rate is not effectively solved.

According to above-mentioned contents, what is needed is to develop an improved solution to solve the convention problem of a poor space utilization rate.

### SUMMARY OF THE INVENTION

An objective of the present invention is to disclose a locker system capable of dynamically generating a storage space based on an object volume and an operation method thereof, to solve the convention problem of a poor space utilization rate.

In order to achieve the objective, the present invention discloses a locker system capable of dynamically generating a storage space based on an object volume according to claim 1.

**The** cabinet body includes an interior space, a front panel, and at least one group of support members, wherein the front panel has cabinet doors, the at least one group of support members is disposed on inner sides of two side plates of the cabinet body, and each of the at least one group of support members is not provided with a detachable carrier in initial. The computer device is connected to the cabinet body and includes a section space calculation module, a section space selection module, and a confirmation module. The section space calculation module is configured to calculate at least one storage space formed by partitioning the interior space by the detachable carrier based on a location of the detachable carrier, and detect a quantity, a size and a usage status of the at least one storage space to generate a section space status. The section space selection module is connected to the section space calculation module, and configured to detect the object volume of a stored object before the stored object is placed into the cabinet body, select one of the unused storage spaces larger than the object volume of the stored object based on the section space status, unlock the N+1 cabinet doors,wherein N is a positive integer and corresponding to the number of doors defining the selected storage space, and prompt a specified location for disposing the detachable carrier at the top of the storage space based on a height of the stored object to partition the interior space to generate the different storage space. The confirmation module is connected to the section space calculation module and the section space selection module, wherein when the N+1 cabinet doors are detected to be closed and the stored object is placed in the selected storage space and the detachable carrier disposed newly is detected, the confirmation module drives the section space calculation module to calculate and detect the storage space to update the section space status and switch statuses of the N+1 closed cabinet doors to locked statuses.

In order to achieve the objective, the present invention discloses a locker system capable of dynamically generating a storage space based on an object volume according to claim 5. The cabinet body include an interior space, a front panel, and at least one group of support members, wherein the front panel has cabinet doors, the at least one group of support members is disposed on inner sides of two side plates of the cabinet body, each of the at least one group of support members is not provided with a detachable carrier in initial. The computer device is connected to the cabinet body, and includes a section space calculation module, a section space selection module and a confirmation module. The section space calculation module is configured to continuously calculate at least one storage space which is remaining and available, based on a space occupied by at least one stored object placed in the interior space, and detect a quantity and a size of the at least one storage space to generate a section space status. The section space selection module is connected to the section space calculation module, wherein before a stored object is placed, the section space selection module is configured to detect the object volume of the stored object, select one of the storage spaces larger than the object volume of the stored object, based on the section space status, and open the N cabinet doors corresponding to the selected storage space, wherein N is a positive integer. The confirmation module is connected to the section space calculation module and the section space selection module, wherein when the detachable carrier does not exist on a bottom of the selected storage space, the confirmation module prompts to dispose the detachable carrier on the bottom of the selected storage space, and when the N cabinet doors are closed, the confirmation module drives the section space calculation module to calculate and detect the storage space to update the section space status.

In order to achieve the objective, the present invention discloses an operation method of a locker system according to any one of claims 1 to 4, wherein the operation method is applied in environment where a cabinet body and a computer device are disposed, the cabinet body includes an interior space, the operation method includes steps of: providing a detachable carrier, disposing cabinet doors on a front panel of the cabinet body, disposing at least one group of support members on inner sides of two side plates of the cabinet body, wherein each of the at least one group of support members is not provided with a detachable carrier in initial; calculating at least one storage space generated by partitioning the interior space by the detachable carrier based on a location of the detachable carrier, and detecting a quantity, a size and a usage status of the at least one storage space to generate a section space status, by the computer device; before a stored object is placed into the cabinet body, detecting the object volume of the stored object, selecting one of the unused storage spaces larger than the object volume of the stored object based on the section space status, unlocking the N+1 cabinet doors wherein N is a positive integer and corresponding to the number of doors defining the selected storage space prompting a specified location for disposing the detachable carrier to partition the interior space to generate the different storage space based on a height of the stored object, by the computer device; and when the N+1 cabinet doors are detected to be closed and the stored object is placed in the selected storage space and the detachable carrier disposed newly is detected, calculating and detecting the storage space to update the section space status, and switching statuses of the N+1 closed cabinet doors to locked statuses, by the computer device.

In order to achieve the objective, the present invention discloses an operation method of a locker system according to claim 5, wherein the operation method is applied in environment where a cabinet body and a computer device are disposed, the cabinet body includes an interior space, the operation method includes steps of: providing a detachable carrier, disposing cabinet doors on a front panel of the cabinet body, disposing at least one group of support members on inner sides of two side plates of the cabinet door, wherein each of the at least one group of support members is not provided with a detachable carrier in initial; continuously calculating at least one storage space which is remaining and available based on a space occupied by at least one stored object placed in the interior space, and detecting a quantity and a size of the at least one storage space to generate a section space status, by the computer device; before a stored object is placed, detecting the object volume of the stored object, selecting one of the storage spaces larger than the object volume of the stored object based on the section space status, and opening the N cabinet doors corresponding to the selected storage space, by the computer device, wherein N is a positive integer; when the detachable carrier does not exist on a bottom of the selected storage space, prompting to dispose the detachable carrier on the bottom of the selected storage space, and when the N cabinet doors are closed, calculating and detecting the storage space to update the section space status, by the computer device.

According to the above-mentioned systems and operation methods of the present invention, the difference between the present invention and the conventional technology is that, in the present invention, the at least one group of support members is disposed on the cabinet body to allow a user to select whether to dispose the detachable carrier; in order to place the stored object into the cabinet body, the object volume of the stored object is detected, the user is prompted to dispose the detachable carrier at the specified location inside the cabinet body based on the object volume, so that the interior space of the cabinet door can be dynamically partitioned to generate an appropriate storage space for placing the stored object.

**Therefore,** the above-mentioned solution of the present invention is able to achieve the technical effect of improving a space usage rate.

### BRIEF DESCRIPTION OF THE DRAWINGS

**The** structure, operating principle and effects of the present invention will be described in detail by way of various embodiments which are illustrated in the accompanying drawings.
**FIG.** 1A is a block diagram of a first embodiment of a locker system capable of dynamically generating a storage space based on an object volume, according to the present invention.
**FIG.** 1B is a block diagram of a second embodiment of a locker system capable of dynamically generating a storage space based on an object volume, according to the present invention.
**FIG.** 2A is a flowchart of a first embodiment of an operation method of locker system capable of dynamically generating a storage space based on an object volume, according to the present invention.
FIG. 2B is a flowchart of a second embodiment of an operation method of a locker system capable of dynamically generating a storage space based on an object volume, according to the present invention.
FIG. 3 is a schematic view of an operation of selecting a storage space, according to an application of the present invention.
FIG. 4 is a schematic view of an operation of disposing a detachable carrier, according to an application of the present invention.
FIG. 5 is a schematic view of a support member, according to an application of the present invention.
FIG. 6 is a schematic view of an operation of disposing a detachable carrier between upper edges and lower edges of two cabinet doors, according to an application of the present invention.
FIG. 7 is a schematic view of a L-shaped support member and a corresponding detachable carrier, according to an application of the present invention.

### DETAILED DESCRIPTION OF THE PREFERRED EMBODIMENTS

The following embodiments of the present invention are herein described in detail with reference to the accompanying drawings. These drawings show specific examples of the embodiments of the present invention. These embodiments are provided so that this disclosure will be thorough and complete, and will fully convey the scope of the invention to those skilled in the art. It is to be acknowledged that these embodiments are exemplary implementations and are not to be construed as limiting the scope of the present invention in any way. Further modifications to the disclosed embodiments, as well as other embodiments, are also included within the scope of the appended claims.

These embodiments are provided so that this disclosure is thorough and complete, and fully conveys the inventive concept to those skilled in the art. Regarding the drawings, the relative proportions and ratios of elements in the drawings may be exaggerated or diminished in size for the sake of clarity and convenience. Such arbitrary proportions are only illustrative and not limiting in any way. The same reference numbers are used in the drawings and description to refer to the same or like parts. As used herein, the singular forms "a", "an" and "the" are intended to include the plural forms as well, unless the context clearly indicates otherwise.

It is to be acknowledged that, although the terms 'first', 'second', 'third', and so on, may be used herein to describe various elements, these elements should not be limited by these terms. These terms are used only for the purpose of distinguishing one component from another component. Thus, a first element discussed herein could be termed a second element without altering the description of the present disclosure. As used herein, the term "or" includes any and all combinations of one or more of the associated listed items.

**It** will be acknowledged that when an element or layer is referred to as being "on," "connected to" or "coupled to" another element or layer, it can be directly on, connected or coupled to the other element or layer, or intervening elements or layers may be present. In contrast, when an element is referred to as being "directly on," "directly connected to" or "directly coupled to" another element or layer, there are no intervening elements or layers present.

In addition, unless explicitly described to the contrary, the words "comprise" and "include", and variations such as "comprises", "comprising", "includes", or "including", will be acknowledged to imply the inclusion of stated elements but not the exclusion of any other elements.

The terms self-defined in the present invention are descripted before illustration of the locker system capable of dynamically generating a storage space based on an object volume and an operation method. The locker system of the present invention means a smart object storage cabinet with detection, calculation and control functions, and needs electrical power supply for normal functioning. The locker system includes a cabinet body, and a computer device having a section space calculation module, a section space selection module, and a confirmation module. The electrical power supply can be from commercial power, a power bank, a battery, solar apparatus or the like. The locker system will be illustrated in detail with reference to embodiments and drawing figures in the following paragraphs.

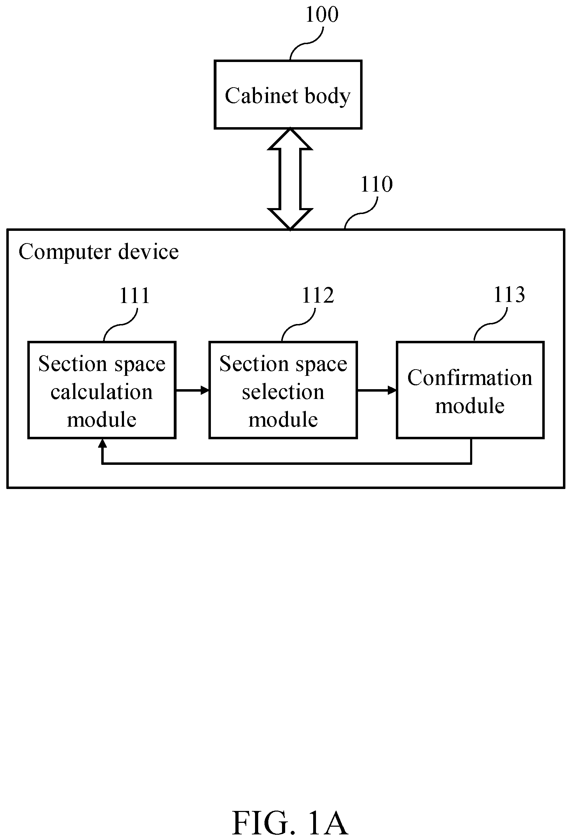

The locker system capable of dynamically generating a storage space based on an object volume and the operation method thereof will hereinafter be described in more detail with reference to the accompanying drawing figures. Please refer to FIG. 1A, which is a block diagram of a first embodiment of a locker system capable of dynamically generating a storage space based on an object volume, according to the present invention. As shown in FIG. 1A, the locker system includes a cabinet body 100, a detachable carrier 410,510,710 and a computer device 110. The cabinet body 100 includes an interior space, a front panel and at least one group of support members. The front panel has cabinet doors, the at least one group of support members is disposed on inner sides of two side plates of the cabinet body 100, and each of the at least one group of support members is not provided with a detachable carrier in initial. In actual implementation, the cabinet doors can be left-opening/right-opening pulling doors/sliding doors or the like, each group of the support members includes a pair of recessed tracks and an engagement device, recessed openings of the recessed tracks face to each other in parallel, a width of the recessed opening is 2M cm, and a thickness of the detachable carrier is M cm, M is a positive integer. When the detachable carrier is fully placed into the pair of recessed tracks, the engagement device is engaged with the detachable carrier. In another embodiment, the support member can be an L-shaped support member, each of two vertical sides of the detachable carrier has a recessed part, the recessed part is configured to connect to an extension part at a bottom of the L-shaped support member, and the detachable carrier can be inserted or pulled out along the support member in a horizontal axis. The details of the structure will be illustrated with reference to the accompanying drawings in the following paragraphs. In an embodiment, the computer device 110 can be disposed inside or outside the cabinet body 100, or remotely linked to the cabinet body 100. It is particularly noted that the detachable carrier can be a mesh or a folding plate pre-placed in the cabinet body 100. Besides, the cabinet bodies 100 with different sizes (such as different lengths, widths or depths) can be provided to connect the computer device 110, so that the cabinet bodies 100 can be applied to different object volumes.

**The** computer device 110 is connected to the cabinet body 100 and includes a section space calculation module 111, a section space selection module 112, and a confirmation module 113. The section space calculation module 111 is configured to calculate a storage space generated by partitioning the interior space by the detachable carrier, based on a location of the detachable carrier, and also detect a quantity, a size and a usage status of the storage space to generate a section space status. In actual implementation, the location of the detachable carrier can be continuously detected and confirmed through the detection device installed inside the cabinet body 100, or the required storage space and the location of the corresponding detachable carrier can be calculated based on size data in database. The detection device can be a sensor, and transmit data through WiFi and ZigBee, constrained application protocol, message queuing telemetry transport (MQTT), similar wireless transmission technology.

The section space selection module 112 is connected to the section space calculation module 111. Before a stored object is placed, the section space selection module 112 detects an object volume of the stored object, and selects one of the unused storage spaces larger than the object volume of the stored object based on the section space status, unlocks the N+1 cabinet doors corresponding to the selected storage space, prompts a specified location for disposing the detachable carrier to partition the interior space to generate the different storage space, based on a height of the stored object, wherein N is a positive integer. In actual implementation, the object volume of the stored object can be detected by using at least one of a radar ranging module, an image recognition module and mechanical tool to measure a length, a width and a height of the stored object to calculate the object volume, or directly detecting a volume value inputted through a mobile application program or a GUI. When selecting the storage space, the section space selection module 112 filters out unused storage spaces larger than the object volume of the stored object, selects the unused storage space having minimal volume; when the detachable carrier exists above the selected storage space, it indicates that the above storage space may be in use, even the above storage space is not in use, because the detachable carrier has been disposed, it is not necessary to dispose the detachable carrier again, so the section space selection module 112 can prohibit the highest one among the N+1 cabinet doors from being opened, and open the cabinet doors just for taking out the stored object in the storage space. It further explains that the specified location can be between upper edges and lower edges of the highest and the second highest ones among the opened cabinet doors, and this scheme will be illustrated in detail with reference to the accompanying drawings in the following paragraphs. It is particularly noted that, for example, in a condition that the cabinet body 100 has 3 cabinet doors numbered 1, 2 and 3 from top to bottom, when the selected storage space corresponds to the cabinet doors numbered 2 and 3, the "N+1 cabinet doors" means N is 2 and represents the two cabinet doors numbered 2 and 3, and "1" represents the above cabinet door numbered 1. In other words, "+1" represents the cabinet door above the storage space by one layer.

The confirmation module 113 is connected to the section space calculation module 111 and the section space selection module 112. When the N+1 cabinet doors are detected to be closed and the stored object is placed in the selected storage space and the detachable carrier disposed newly is detected, the confirmation module 113 drives the section space calculation module 111 to calculate and detect the storage space to update the section space status, and switches the statuses of the N+1 closed cabinet doors to locked statuses. In actual implementation, a sensor mounted on the cabinet body or the cabinet door can be used to detect whether the N cabinet doors are closed; the sensor can be, for example, a pressure-sensitive sensor, a light-sensitive sensor or other sensor capable of detecting whether the cabinet door is closed; the sensor even can detect whether the detachable carrier is fastened; when the detachable carrier is detected to be fastened already, it indicates that the detachable carrier is newly disposed.

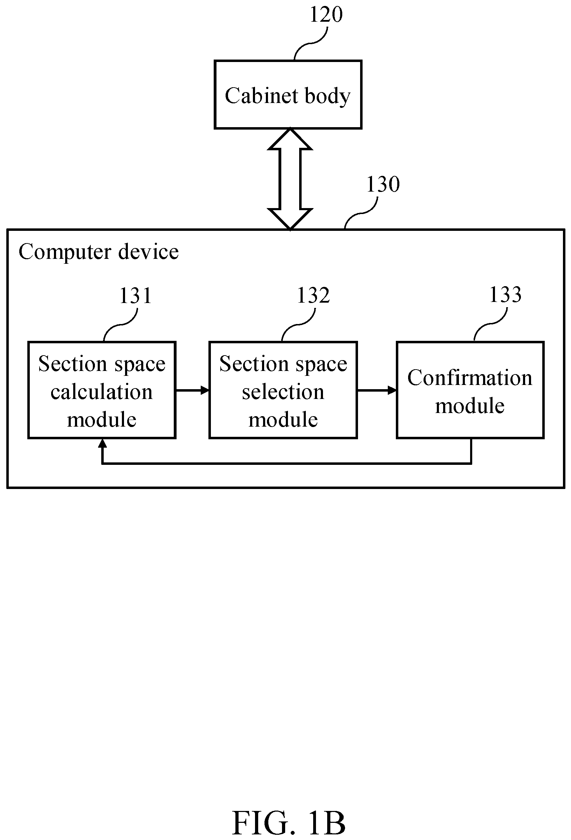

Please refer to FIG. 1B, which is a block diagram of a second embodiment of a locker system capable of dynamically generating a storage space based on an object volume, according to the present invention. As shown in FIG. 1B, the locker system includes a cabinet body 120, a detachable carrier 410,510,710 and a computer device 130, the cabinet body 120 is the same as the cabinet body 100 of FIG. 1A, so the detailed description is not repeated herein. The computer device 130 includes a section space calculation module 131, a section space selection module 132, and a confirmation module 133. The section space calculation module 131 is configured to continuously calculate the remaining available storage space based on the space occupied by the stored object placed in the interior space, and detect a quantity and size of the storage space to generate a section space status. In actual implementation, different sensors can be used to sense the space occupied by the stored object in the interior space, for example, a light occlusion sensor can be used to sense a height of the stored object to calculate a remaining height of the cabinet door 120 and calculate the remaining available storage space.

The section space selection module 132 is connected to the section space calculation module 131. Before a stored object is placed, the section space selection module 132 detects the object volume of the stored object, selects one of storage space greater than the object volume of the stored object based on the section space status, and opens the N cabinet doors corresponding to the selected storage space, N is a positive integer. The main difference between the second embodiment and the first embodiment is that the section space selection module 112 of the first embodiment opens N+1 cabinet doors, and the section space selection module 132 of the second embodiment opens the N cabinet doors; in other words, the second embodiment does not need to open the additional cabinet door above the N cabinet doors for inserting the detachable carrier.

The confirmation module 133 is connected to the section space calculation module 131 and the section space selection module 132. When the detachable carrier does not exist on a bottom of the selected storage space, the confirmation module 133 prompts to dispose the detachable carrier on a bottom of the selected storage space. When the N cabinet doors are closed, the confirmation module 133 drives the section space calculation module 131 to calculate and detect the storage space to update the section space status. The different between the confirmation module 133 and the confirmation module 113 is that when the detachable carrier does not exist on the bottom of the selected storage space, the confirmation module 133 prompts the user to dispose the detachable carrier on the bottom of the storage space, so as to provide the carrier for placing another stored object next time.

**It** is to be particularly noted that, in actual implementation, the modules of the present invention can be implemented by various manners, including software, hardware or any combination thereof, for example, in an embodiment, the module can be implemented by software and hardware, or one of software and hardware. Furthermore, the present invention can be implemented fully or partly based on hardware, for example, one or more module of the system can be implemented by integrated circuit chip, system on chip (SoC), a complex programmable logic device (CPLD), or a field programmable gate array (FPGA). The concept of the present invention can be implemented by a system, a method and/or a computer program. The computer program can include computer-readable storage medium which records computer readable program instructions, and the processor can execute the computer readable program instructions to implement concepts of the present invention. The computer-readable storage medium can be a tangible apparatus for holding and storing the instructions executable of an instruction executing apparatus. Computer-readable storage medium can be, but not limited to electronic storage apparatus, magnetic storage apparatus, optical storage apparatus, electromagnetic storage apparatus, semiconductor storage apparatus, or any appropriate combination thereof. More particularly, the computer-readable storage medium can include a hard disk, an RAM memory, a read-only-memory, a flash memory, an optical disk, a floppy disc or any appropriate combination thereof, but this exemplary list is not an exhaustive list. The computer-readable storage medium is not interpreted as the instantaneous signal such a radio wave or other freely propagating electromagnetic wave, or electromagnetic wave propagated through waveguide, or other transmission medium (such as optical signal transmitted through fiber cable), or electric signal transmitted through electric wire. Furthermore, the computer readable program instruction can be downloaded from the computer-readable storage medium to each calculating/processing apparatus, or downloaded through network, such as internet network, local area network, wide area network and/or wireless network, to external computer equipment or external storage apparatus. The network includes copper transmission cable, fiber transmission, wireless transmission, router, firewall, switch, hub and/or gateway. The network card or network interface of each calculating/processing apparatus can receive the computer readable program instructions from network, and forward the computer readable program instruction to store in computer-readable storage medium of each calculating/processing apparatus. The computer program instructions for executing the operation of the present invention can include source code or object code programmed by assembly language instructions, instruction-set-structure instructions, machine instructions, machine-related instructions, micro instructions, firmware instructions or any combination of one or more programming language. The programming language include object oriented programming language, such as Common Lisp, Python, C++, Objective-C, Smalltalk, Delphi, Java, Swift, C#, Perl, Ruby, and PHP, or regular procedural programming language such as C language or similar programming language. The computer readable program instruction can be fully or partially executed in a computer, or executed as independent software, or partially executed in the client-end computer and partially executed in a remote computer, or fully executed in a remote computer or a server.

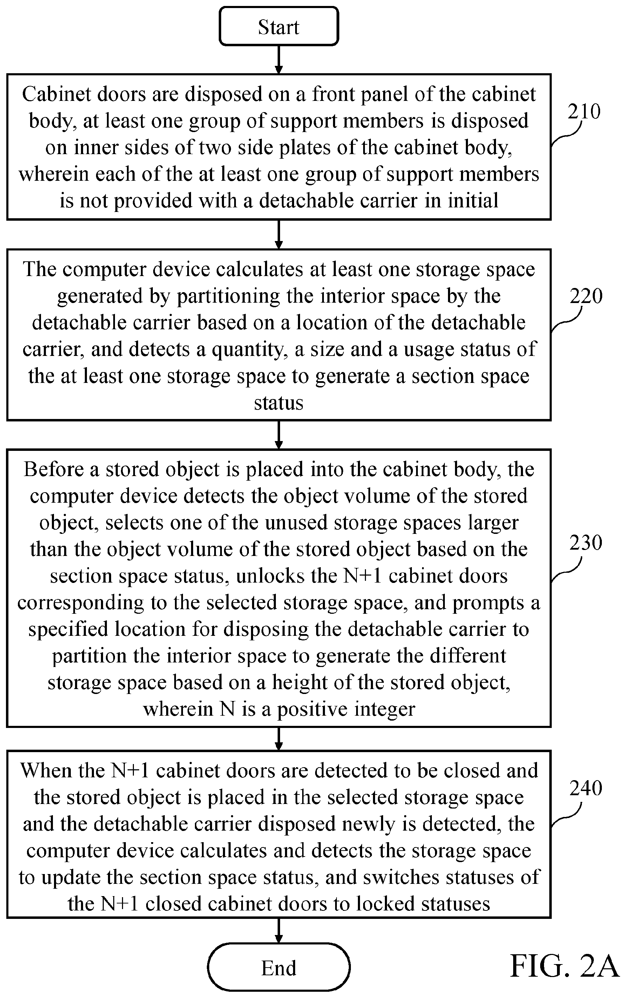

Please refer to FIG. 2A, which is a flowchart of a first embodiment of an operation method according to claim 6. The operation method is applied in environment where a cabinet body 100 and a computer device 110 are disposed, the cabinet body 100 includes an interior space, and the operation method includes the following steps. In a step 210, cabinet doors are disposed on a front panel of the cabinet body 100, at least one group of support members is disposed on inner sides of two side plates of the cabinet body 100, wherein each of the at least one group of support members is not provided with a detachable carrier in initial. In a step 220, the computer device calculates at least one storage space generated by partitioning the interior space by the detachable carrier based on a location of the detachable carrier, and detects a quantity, a size and a usage status of the at least one storage space to generate a section space status. In a step 230, before a stored object is placed into the cabinet body, the computer device detects the object volume of the stored object, selects one of the unused storage spaces larger than the object volume of the stored object based on the section space status, unlocks the N+1 cabinet doors corresponding to the selected storage space, and prompts a specified location for disposing the detachable carrier to partition the interior space to generate the different storage space based on a height of the stored object, wherein N is a positive integer. In a step 240, when the N+1 cabinet doors are detected to be closed and the stored object is placed in the selected storage space and the detachable carrier disposed newly is detected, the computer device calculates and detects the storage space to update the section space status, and switches statuses of the N+1 closed cabinet doors to locked statuses. Through aforementioned steps, at least one group of support members is disposed on the cabinet body 100 to allow a user to select whether to dispose the detachable carrier; in order to place an stored object, the object volume of the stored object is detected, the user is prompted to dispose the detachable carrier at the specified location inside the cabinet body 100 based on the object volume, so that the interior space of the cabinet body 100 can be dynamically partitioned to generate an appropriate storage space for placing the stored object. The situation where the first embodiment is applied is to access the stored object in self-service; when the stored object is placed for the first time, the detachable carrier must be disposed at the specified location for other user to place another stored object.

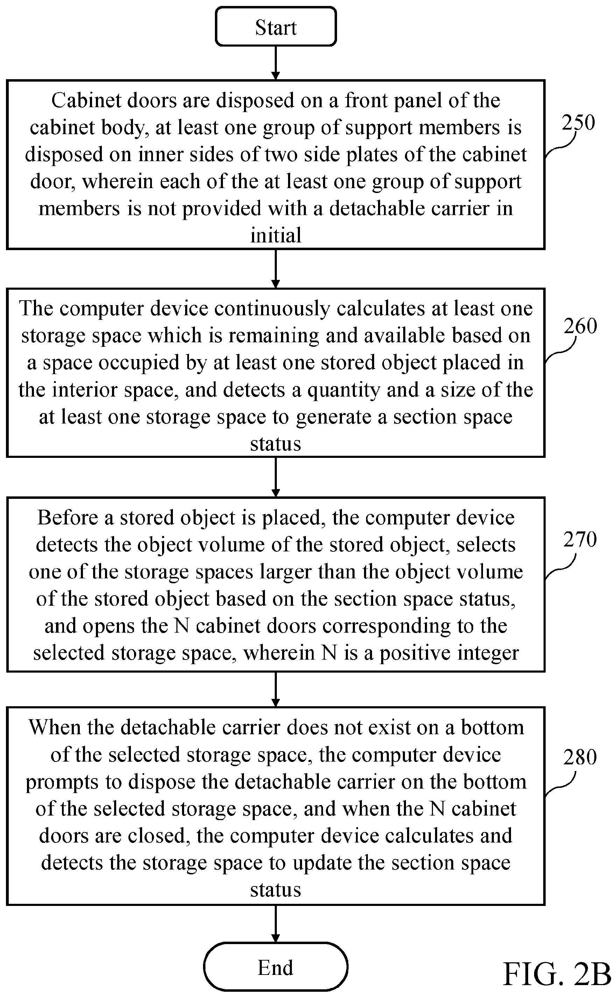

Please refer to FIG. 2B, which is a flowchart of a second embodiment of an operation method according to claim 10. The operation method is applied in environment where a cabinet door 120 and a computer device 130 are disposed, the cabinet door 120 has an interior space, and the operation method includes the following steps. In a step 250, cabinet doors are disposed on a front panel of the cabinet body, at least one group of support members is disposed on inner sides of two side plates of the cabinet door, wherein each of the at least one group of support members is not provided with a detachable carrier in initial. In a step 260, the computer device continuously calculates at least one storage space which is remaining and available based on a space occupied by at least one stored object placed in the interior space, and detects a quantity and a size of the at least one storage space to generate a section space status. In a step 270, before a stored object is placed, the computer device detects the object volume of the stored object, selects one of the storage spaces larger than the object volume of the stored object based on the section space status, and opens the N cabinet doors corresponding to the selected storage space, wherein N is a positive integer. In a step 280, when the detachable carrier does not exist on a bottom of the selected storage space, the computer device prompts to dispose the detachable carrier on the bottom of the selected storage space, and when the N cabinet doors are closed, the computer device calculates and detects the storage space to update the section space status. Compared with the first embodiment of FIG. 2A, the situation where the second embodiment is applied is that the user placing the stored object is a trusted person, and the main difference between the first embodiment and the second embodiment is that in the second embodiment the detachable carrier does not need to be disposed when the stored object is placed for the first time, it just needs to dispose the detachable carrier at the bottom of the selected storage space when the user places another stored object for the second time.

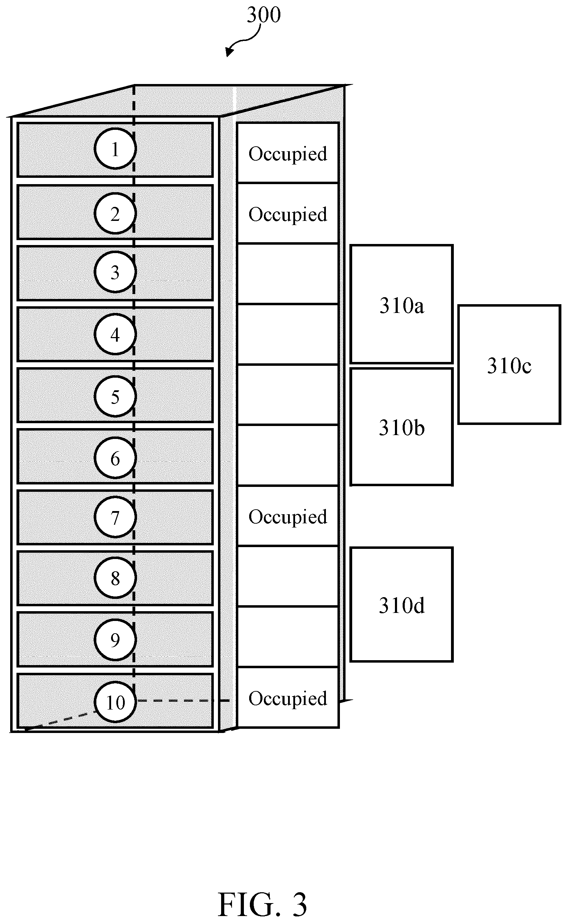

**The** embodiment will be illustrated with reference to FIG. 3 to FIG. 7. Please refer to FIG. 3, which is a schematic view of an operation of selecting a storage space, according to an application of the present invention. The computer device 110 calculates a storage space generated by partitioning the interior space by the detachable carrier, based on the location of the detachable carrier, and detects a quantity, a size and a usage status of the storage space to generate a section space status. In order to place a new item (that is, the stored object), the computer device 110 detects the object volume of the stored object through a detection device, selects one of the unused storage spaces larger than the object volume of the stored object based on the current section space status, and unlocks N+1 cabinet doors corresponding to the selected storage space. For example, as shown in FIG. 3, there are ten cabinet doors numbered 1 to 10, when there are stored objects placed in the four cabinet doors numbered 1, 2, 7 and 10, it indicates these storage spaces are in use or occupied. When the stored object to be placed needs a storage space with a height of two cabinet doors, after the occupied storage spaces are excluded, the computer device 110 selects one of the detected storage spaces 310a~310d; in actual implementation, the storage space 310d is selected in priority, the storage spaces 310a~310c are not selected because they can form a larger storage space, so that these storage spaces can be reserved for other higher object later.

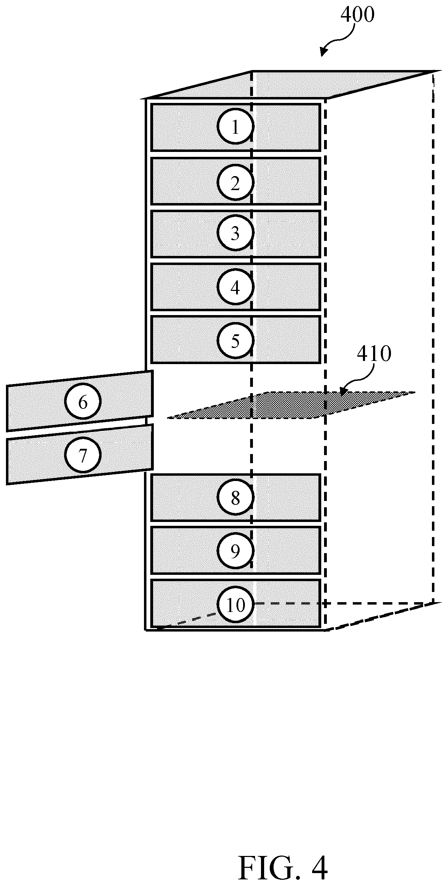

**As** shown in FIG. 4, which is a schematic view of an operation of disposing a detachable carrier, according to an application of the present invention. In initial, no detachable carrier 410 is disposed in the cabinet door 400 in advance; when the user wants to place a stored object with a height of four section spaces, the computer device 110 selects the storage space formed by the cabinet doors numbered 7 to 10 for the user to place the stored object; in this case, the space above the selected storage space is not in use, so the computer device 110 unlocks multiple cabinet doors (that is, the cabinet doors numbered 6 to 10) corresponding to the selected storage space, and prompts a specified location for disposing the detachable carrier 410, that is, the specified location is between the cabinet doors numbered 6 and 7 in this example. The specified location including the numbers of the cabinet doors can be outputted through SMS or a displayer. It is particularly noted that the reason of unlocking the cabinet doors numbered 6 to 10 but not the cabinet doors numbered 7 to 10 is that the cabinet door numbered 6 must be opened when the user wants to dispose the detachable carrier 410 between the cabinet doors numbered 6 and 7; in other words, the total height of the multiple cabinet doors corresponding to the selected storage space is higher than the storage space by a layer (that is, one more cabinet door). When a detachable carrier 410 exists above the selected storage space, it indicates that the above storage space is in use possibly, and it is unnecessary to dispose the detachable carrier 410, for the safety of picking up item, the cabinet door numbered 6 is prohibited from being opened in this example, that is, the highest one of the cabinet doors is prohibited from being opened.

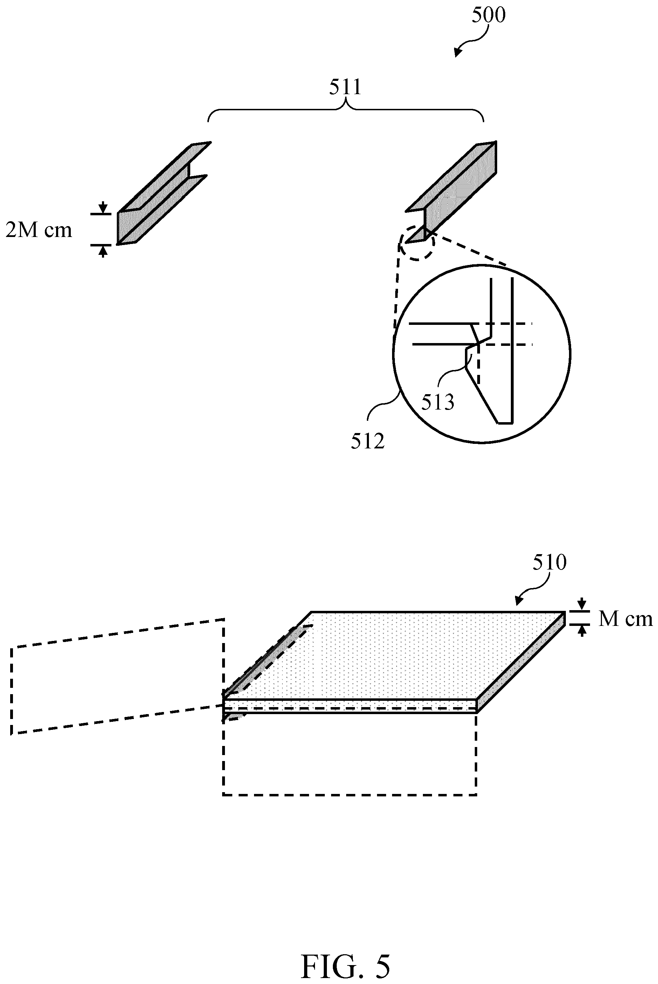

Please refer to FIG. 5, which is a schematic view of a support member, according to an application of the present invention. In actual implement action, the support member 500 includes a pair of recessed tracks 511 and an engagement device 512, the recessed openings of the recessed tracks 511 face to each other in parallel, a width of the recessed opening is 2M cm, and a thickness of the detachable carrier 510 is M cm, wherein M is a positive integer. When the detachable carrier 510 is fully placed into the pair of recessed tracks 511, the engagement device 512 is engaged with the detachable carrier 510. For example, when a width of the recessed opening is 3 cm, a thickness of the detachable carrier 510 is 1.5 cm. When a sender places the detachable carrier 510 along the recessed track 511 and presses the detachable carrier 510 downwardly to make the engagement device 512 be engaged with the detachable carrier 510; due to an engagement part 513 is shown in FIG. 5, after the detachable carrier 510 is engaged with the engagement device 512, the detachable carrier 510 cannot be lifted up, and the below cabinet door is closed, so the detachable carrier 510 cannot be pulled out along the recessed track 511; in other words, the detachable carrier 510 is disposed between upper edges and lower edges of the highest and the second highest ones among the opened cabinet doors. On the other hand, when the below cabinet door is opened, the engagement device 512 can be pushed upward from the bottom, and the user is unable to flip the detachable carrier 510 due to the obstruction of the recessed track 511, so that the security of storing item in each storage space can be ensured.

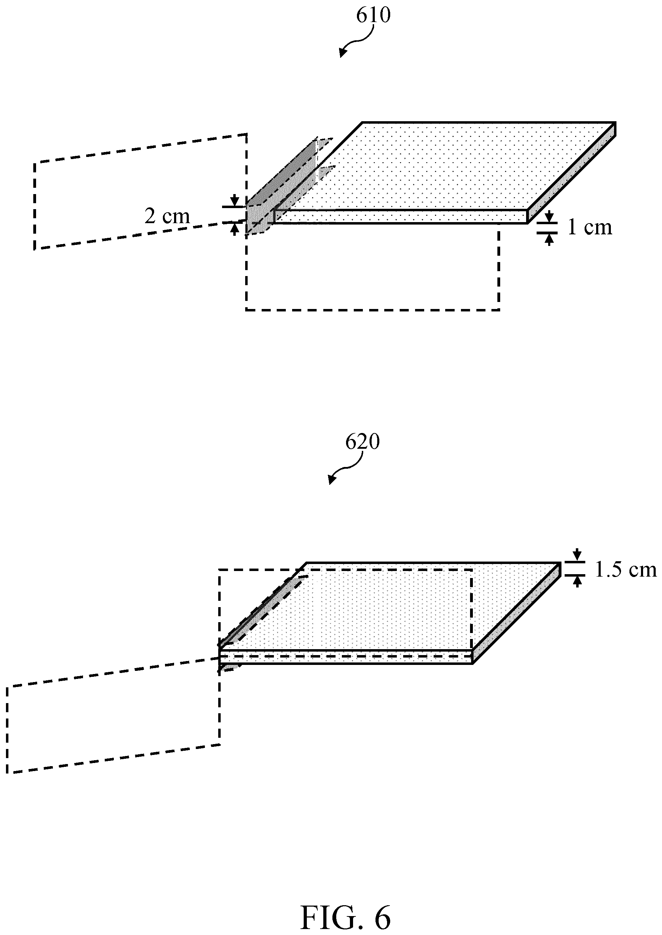

**As** shown in FIG. 6, which is a schematic view of an operation of disposing a detachable carrier between upper edges and lower edges of two cabinet doors, according to an application of the present invention. For example, a width of the recessed opening can be 3 cm, a thickness of the detachable carrier can be 1.5 cm; in actual implementation, in a first situation 610 where the above cabinet door is opened and the below cabinet door is closed, the detachable carrier can be smoothly placed and downwardly pressed to engage with the engagement device, in this case, it is difficult for the user to take out the detachable carrier because the 1 cm part of the detachable carrier is blocked by the below cabinet door. On the other hand, in a second situation 620 where the above cabinet door is closed and the below cabinet door is opened, the detachable carrier is blocked by the above cabinet door, and the user is unable to upwardly push the detachable carrier from the storage space of single below cabinet door.

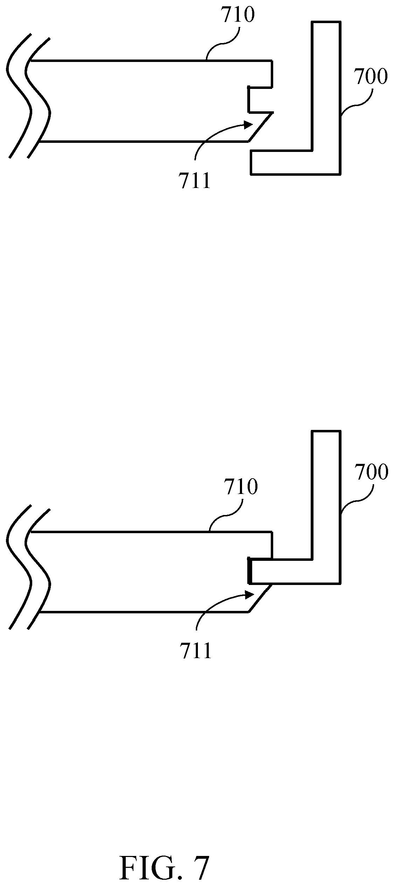

**As** shown in FIG. 7, which is a schematic view of an L-shaped support member and a corresponding detachable carrier, according to an application of the present invention. In actual implementation, besides the support member 500 shown in FIG. 5, an L-shaped support member 700 can be used with the corresponding detachable carrier 710. The upper part of FIG. 7 is a schematic view showing the detachable carrier 710 which is not disposed completely, the user can downwardly press the detachable carrier 710 to make the engagement device 711 retract inwardly; the lower part of FIG. 7 shows that the recessed part is engaged with the L-shaped support member 700 and the engagement device 711 recovers at the same time. In order to take out the detachable carrier 710, in a condition that the cabinet door corresponding to the L-shaped support member 700 is opened, the detachable carrier 710 can be directly pulled out along the cabinet body. Similarly, in the same condition, in order to dispose the detachable carrier 710, the recessed part of the detachable carrier 710 can be directly engaged with an extension part on the bottom of the L-shaped support member 700, and the detachable carrier 710 can be inserted along a horizontal axis to complete the disposing operation.

According to above-mentioned contents, the difference between the present invention and the conventional technology is that, in the present invention, the at least one group of support members is disposed on the cabinet body to allow a user to select whether to dispose the detachable carrier; in order to place the stored object into the cabinet body, the object volume of the stored object is detected, the user is prompted to dispose the detachable carrier at the specified location inside the cabinet body based on the object volume, so that the interior space of the cabinet door can be dynamically partitioned to generate an appropriate storage space for placing the stored object. Therefore, the above-mentioned technical solution of the present invention is able to solve the convention problem and achieve the technical effect of improving a space usage rate.

The present invention disclosed herein has been described by means of specific embodiments. However, numerous modifications, variations and enhancements can be made thereto by those skilled in the art as long as they fall within the scope of the claims.

## Claims

1. A locker system capable of dynamically generating a storage space based on an object volume, and the locker system comprising:
a detachable carrier (410,510,710);
a cabinet body (100,120), comprising an interior space, a front panel, and at least one group of support members (500), wherein the front panel has cabinet doors (1-10), the at least one group of support members (500) is disposed on inner sides of two side plates of the cabinet body (100,120), and each of the at least one group of support members (500) is not provided with the detachable carrier (410,510,710) in initial; and
a computer device (110), connected to the cabinet body and **characterized in that** the computer device (110) comprises:
a section space calculation module (111), configured to calculate at least one storage space formed by partitioning the interior space by the detachable carrier (410,510,710) based on a location of the detachable carrier (410,510,710), and detect a quantity, a size and a usage status of the at least one storage space to generate a section space status;
a section space selection module (112), connected to the section space calculation module, and configured to detect the object volume of a stored object before the stored object is placed into the cabinet body, select one of the unused storage spaces larger than the object volume of the stored object based on the section space status, unlock the **N+1** cabinet doors, wherein N is a positive integer and corresponding to the number of doors defining the selected storage space, and prompt a specified location for disposing the detachable carrier (410,510,710) at the top of the storage space based on a height of the stored object to partition the interior space to generate the different storage space; and
a confirmation module (113), connected to the section space calculation module (111) and the section space selection module (112), wherein when the **N+1** cabinet doors are detected to be closed and the stored object is placed in the selected storage space and the detachable carrier (410,510,710) disposed newly is detected, the confirmation module drives the section space calculation module to calculate and detect the storage space to update the section space status and switch statuses of the N+1 closed cabinet doors to locked statuses.

2. The locker system capable of dynamically generating a storage space based on an object volume according to claim 1, wherein when selecting the storage space, the section space selection module (112) filters out the unused storage spaces larger than the object volume of the stored object, selects the storage space having a minimal volume from the filtered unused storage spaces, and when the detachable carrier (410,510,710) exists above the selected storage space, the section space selection module (112) prohibits the highest one of the N+1 cabinet doors from being opened.

3. The locker system capable of dynamically generating a storage space based on an object volume according to claim 1, wherein each group of the support members (500) comprises a pair of recessed tracks (511) and an engagement device (512), recessed openings of the pair of recessed tracks (511) face to each other in parallel, a width of the recessed opening is 2*M cm, a thickness of the detachable carrier (510) is M cm, wherein when the detachable carrier (510) is fully placed into the pair of recessed tracks (511), the engagement device (512) engages the detachable carrier (510), wherein M is a positive integer.

4. The locker system capable of dynamically generating a storage space based on an object volume according to claim 1, wherein the support member is an L-shaped support member (700), each of two vertical sides of the detachable carrier (710) has a recessed part, each of the recessed parts is configured to connect to an extension part at a bottom of the L-shaped support member (700), and the L-shaped detachable carrier (710) is inserted into or pulled out from the L-shaped support member (700) along a horizontal axis.

5. A locker system capable of dynamically generating a storage space based on an object volume, and the locker system comprising:
a detachable carrier (410,510,710);
a cabinet body (100,120), comprising an interior space, a front panel, and at least one group of support members (500), wherein the front panel has cabinet doors (1-10), the at least one group of support members (500) is disposed on inner sides of two side plates of the cabinet body (100,120), each of the at least one group of support members (500) is not provided with the detachable carrier (410,510,710) in initial; and
a computer device (110), connected to the cabinet body (100,120), and **characterized in that** the computer device (110) comprises:
a section space calculation module (111), configured to continuously calculate at least one storage space which is remaining and available, based on a space occupied by at least one stored object placed in the interior space, and detect a quantity and a size of the at least one storage space to generate a section space status;
a section space selection module (112), connected to the section space calculation module (111), wherein before a stored object is placed, the section space selection module is configured to detect the object volume of the stored object, select one of the storage spaces larger than the object volume of the stored object, based on the section space status, and open the N cabinet doors corresponding to the selected storage space, wherein N is a positive integer; and
a confirmation module (113), connected to the section space calculation module (111) and the section space selection module (112), wherein when the detachable carrier (410,510,710) does not exist on a bottom of the selected storage space, the confirmation module (113) prompts to dispose the detachable carrier (410,510,710) on the bottom of the selected storage space, and when the N cabinet doors are closed, the confirmation module (113) drives the section space calculation module to calculate and detect the storage space to update the section space status.

6. An operation method of a locker system according to any one of claims 1 to 4, wherein the operation method is applied in an environment where a cabinet body and a computer device are disposed, the cabinet body comprises an interior space, the operation method comprises:
providing a detachable carrier (410,510,710);
disposing cabinet doors (1-10) on a front panel of the cabinet body (100,120), disposing at least one group of support members (500) on inner sides of two side plates of the cabinet body (100,120), wherein each of the at least one group of support members (500) is not provided with the detachable carrier (410,510,710) in initial; **characterised in that** the method further comprises
calculating at least one storage space generated by partitioning the interior space by the detachable carrier (410,510,710) based on a location of the detachable carrier (410,510,710), and detecting a quantity, a size and a usage status of the at least one storage space to generate a section space status, by the computer device (110);
before a stored object is placed into the cabinet body (100,120), detecting the object volume of the stored object, selecting one of the unused storage spaces larger than the object volume of the stored object based on the section space status, unlocking the N+1 cabinet doors wherein N is a positive integer and corresponding to the number of doors defining the selected storage space, prompting a specified location for disposing the detachable carrier (410,510,710) at the top of the storage space to partition the interior space to generate the different storage space based on a height of the stored object, by the computer device (110); and
when the N+1 cabinet doors (1-10) are detected to be closed and the stored object is placed in the selected storage space and the detachable carrier (410,510,710) disposed newly at the top of the storage space is detected, calculating and detecting the storage space to update the section space status, and switching statuses of the N+1 closed cabinet doors (1-10) to locked statuses, by the computer device (110).

7. The operation method according to claim 6, wherein the step of selecting the storage space comprises:
filtering out the unused storage spaces larger than the object volume of the stored object;
selecting the storage space having a minimal volume from the filtered unused storage spaces; and
when the detachable carrier (410,510,710) exists above the selected storage space, prohibiting the highest one of the N+1 cabinet doors from being opened.

8. The operation method according to claim 6, wherein each group of the support members (500) comprises a pair of recessed tracks (511) and an engagement device (512), recessed openings of the pair of recessed tracks (511) face to each other in parallel, a width of the recessed opening is 2*M cm, a thickness of the detachable carrier (510) is M cm, wherein when the detachable carrier (510) is fully placed into the pair of recessed tracks (511), the engagement device (512) engages the detachable carrier (510), wherein M is a positive integer.

9. The operation method according to claim 6, wherein the support member is an L-shaped support member (700), each of two vertical sides of the detachable carrier (710) has a recessed part, each of the recessed parts is configured to connect to an extension part at a bottom of the L-shaped support member (700), and the L-shaped detachable carrier (710) is inserted into or pulled out from the L-shaped support member (700) along a horizontal axis.

10. An operation method of a locker system according to claim 5, wherein the operation method is applied in an environment where a cabinet body and a computer device are disposed, the cabinet body comprises an interior space, and the operation method comprises:
providing a detachable carrier (410,510,710);
disposing cabinet doors (1-10) on a front panel of the cabinet body (100,120), disposing at least one group of support members (500) on inner sides of two side plates of the cabinet door (1-10), wherein each of the at least one group of support members (500) is not provided with the detachable carrier (410,510,710) in initial; **characterised in that** the method further comprises
continuously calculating at least one storage space which is remaining and available based on a space occupied by at least one stored object placed in the interior space, and detecting a quantity and a size of the at least one storage space to generate a section space status, by the computer device (110);
before a stored object is placed, detecting the object volume of the stored object, selecting one of the storage spaces larger than the object volume of the stored object based on the section space status, and opening the N cabinet doors corresponding to the selected storage space, by the computer device (110), wherein N is a positive integer; and
when the detachable carrier (410,510,710) does not exist on a bottom of the selected storage space, prompting to dispose the detachable carrier (410,510,710) on the bottom of the selected storage space, and when the N cabinet doors are closed, calculating and detecting the storage space to update the section space status, by the computer device.

## Patentansprüche

1. Schließfachsystem, das zur dynamischen Generierung eines Lagerraums basierend auf einem Objektvolumen in der Lage ist, wobei das Schließfachsystem umfasst:
einen abnehmbaren Träger (410,510,710);
einen Schrankkörper (100,120), der einen Innenraum, eine Frontplatte und mindestens eine Gruppe von Stützelementen (500) umfasst, wobei die Frontplatte Schranktüren (1-10) aufweist, die mindestens eine Gruppe von Stützelementen (500) an Innenseiten von zwei Seitenplatten des Schrankkörpers (100,120) angeordnet ist, und jede der mindestens einen Gruppe von Stützelementen (500) ursprünglich nicht mit dem abnehmbaren Träger (410,510,710) versehen ist; und
eine Computervorrichtung (110), die mit dem Schrankkörper verbunden ist und **dadurch gekennzeichnet ist, dass** die Computervorrichtung (110) umfasst:
ein Abschnittsraumberechnungsmodul (111), das konfiguriert ist, um mindestens einen Lagerraum, der durch Unterteilung des Innenraums durch den abnehmbaren Träger (410,510,710) gebildet wird, basierend auf einer Position des abnehmbaren Trägers (410,510,710) zu berechnen, und eine Anzahl, eine Größe und einen Nutzungsstatus des mindestens einen Lagerraums zu ermitteln, um einen Abschnittsraumstatus zu erzeugen;
ein Abschnittsraumauswahlmodul (112), das mit dem Abschnittsraumberechnungsmodul verbunden ist und konfiguriert ist, um das Objektvolumen eines gelagerten Objekts zu ermitteln, bevor das gelagerte Objekt in dem Schrankkörper platziert wird, einen der ungenutzten Lagerräume, der größer als das Objektvolumen des gelagerten Objekts ist, basierend auf dem Abschnittsraumstatus auszuwählen, die N+1 Schranktüren zu entriegeln, wobei N eine positive ganze Zahl ist und der Anzahl der Türen entspricht, die den ausgewählten Lagerraum definieren, und Fordern einer bestimmten Position zum Anordnen des abnehmbaren Trägers (410,510,710) an der Oberseite des Lagerraums basierend auf einer Höhe des gelagerten Objekts, um den Innenraum zu unterteilen, um den anderen Lagerraum zu erzeugen; und
ein Bestätigungsmodul (113), das mit dem Abschnittsraumberechnungsmodul (111) und dem Abschnittsraumauswahlmodul (112) verbunden ist, wobei, wenn die N+1 Schranktüren als geschlossen erkannt werden und das gelagerte Objekt in dem ausgewählten Lagerraum platziert ist und der neu angeordnete abnehmbare Träger (410,510,710) erkannt wurde, das Bestätigungsmodul das Abschnittsraumberechnungsmodul antreibt, um den Lagerraum zu berechnen und zu ermitteln, um den Abschnittsraumstatus zu aktualisieren und den jeweiligen Status der N+1 geschlossenen Schranktüren auf Verriegelungsstatus umzuschalten.

2. Schließfachsystem nach Anspruch 1, das zur dynamischen Generierung eines Lagerraums basierend auf einem Objektvolumen in der Lage ist, wobei, wenn der Lagerraum ausgewählt wird, das Abschnittsraumauswahlmodul (112) die ungenutzten Lagerräume, die größer als das Objektvolumen des gelagerten Objekts sind, herausfiltert, den Lagerraum mit dem minimalen Volumen aus den herausgefilterten ungenutzten Lagerräumen auswählt, und wobei, wenn der abnehmbare Träger (410,510,710) oberhalb des ausgewählten Lagerraums vorhanden ist, das Abschnittsraumauswahlmodul (112) das Öffnen der obersten der N+1 Schranktüren verhindert.

3. Schließfachsystem nach Anspruch 1, das zur dynamischen Generierung eines Lagerraums basierend auf einem Objektvolumen in der Lage ist, wobei jede Gruppe der Stützelemente (500) ein Paar von vertieften Schienen (511) und eine Eingriffsvorrichtung (512) umfasst, wobei vertiefte Öffnungen von dem Paar von vertieften Schienen (511) sich parallel gegenüberstehen, wobei eine Breite der vertieften Öffnung 2*M cm ist, wobei eine Dicke des abnehmbaren Trägers (510) M cm ist, wobei, wenn der abnehmbarer Träger (510) vollständig in dem Paar von vertieften Schienen (511) platziert ist, die Eingriffsvorrichtung (512) mit dem abnehmbaren Träger (510) in Eingriff steht, wobei M eine positive ganze Zahl ist.

4. Schließfachsystem nach Anspruch 1, das zur dynamischen Generierung eines Lagerraums basierend auf einem Objektvolumen in der Lage ist, wobei das Stützelement ein L-förmiges Stützelement (700) ist, wobei jede der zwei vertikalen Seiten des abnehmbaren Trägers (710) einen vertieften Teil aufweist, jeder der vertieften Teile so konfiguriert ist, dass er mit einem Verlängerungsteil an einer Unterseite des L-förmigen Stützelements (700) verbunden wird und der L-förmige abnehmbare Träger (710) entlang einer horizontalen Achse in das L-förmige Stützelement (700) eingeführt oder aus diesem herausgezogen wird.

5. Schließfachsystem, das zur dynamischen Generierung eines Lagerraums basierend auf einem Objektvolumen in der Lage ist, wobei das Schließfachsystem umfasst:
einen abnehmbaren Träger (410,510,710);
einen Schrankkörper (100,120), der einen Innenraum, eine Frontplatte und mindestens eine Gruppe von Stützelementen (500) umfasst, wobei die Frontplatte Schranktüren (1-10) aufweist, die mindestens eine Gruppe von Stützelementen (500) an Innenseiten von zwei Seitenplatten des Schrankkörpers (100,120) angeordnet ist, jede der mindestens einen Gruppe von Stützelementen (500) ursprünglich nicht mit dem abnehmbaren Träger (410,510,710) versehen ist; und
eine Computervorrichtung (110), die mit dem Schrankkörper (100,120) verbunden ist, und **dadurch gekennzeichnet ist, dass** die Computervorrichtung (110) umfasst:
ein Abschnittsraumberechnungsmodul (111), das konfiguriert ist, um basierend auf einem Raum, der von mindestens einem im Innenraum platzierten gelagerten Objekt eingenommen wird, kontinuierlich mindestens einen Lagerraum zu berechnen, der noch übrig und verfügbar ist, und eine Anzahl und eine Größe des mindestens einen Lagerraums zu ermitteln, um einen Abschnittsraumstatus zu generieren;
ein Abschnittsraumauswahlmodul (112), das mit dem Abschnittsraumberechnungsmodul (111) verbunden ist, wobei, bevor ein gelagertes Objekt platziert wird, das Abschnittsraumauswahlmodul so konfiguriert ist, dass es das Objektvolumen des gelagerten Objekts ermittelt, einen der Lagerräume, der größer als das Objektvolumen des gelagerten Objekts ist, basierend auf dem Abschnittsraumstatus auswählt, und die N Schranktüren öffnet, die mit dem ausgewählten Lagerraum korrespondieren, wobei N eine positive ganze Zahl ist; und
ein Bestätigungsmodul (113), das mit dem Abschnittsraumberechnungsmodul (111) und dem Abschnittsraumauswahlmodul (112) verbunden ist, wobei, wenn der abnehmbare Träger (410,510,710) nicht an einem Boden des ausgewählten Lagerraums vorhanden ist, das Bestätigungsmodul (113) fordert, dass der abnehmbare Träger (410,510,710) an dem Boden des ausgewählten Lagerraums angeordnet wird, und wenn die N Schranktüren geschlossen sind, das Bestätigungsmodul (113) das Abschnittsraumberechnungsmodul zur Berechnung und Ermittlung des Lagerraums antreibt, um den Abschnittsraumstatus zu aktualisieren.

6. Betriebsverfahren eines Schließfachsystems nach einem der Ansprüche 1 bis 4, wobei das Betriebsverfahren in einer Umgebung angewendet wird, in der ein Schrankkörper und eine Computervorrichtung angeordnet sind, wobei der Schrankkörper einen Innenraum umfasst, wobei das Betriebsverfahren umfasst:
Bereitstellen eines abnehmbaren Trägers (410,510,710);
Anordnen von Schranktüren (1-10) an einer Frontplatte des Schrankkörpers (100,120), Anordnen von mindestens einer Gruppe von Stützelementen (500) an Innenseiten von zwei Seitenplatten des Schrankkörpers (100,120), wobei jede der mindestens einen Gruppe von Stützelementen (500) ursprünglich nicht mit dem abnehmbaren Träger (410,510,710) versehen ist; **dadurch gekennzeichnet, dass** das Verfahren ferner umfasst
Berechnen von mindestens einem Lagerraum; der durch Unterteilung des Innenraums durch den abnehmbaren Träger (410,510,710) gebildet wird, basierend auf einer Position des abnehmbaren Trägers (410,510,710), und Ermitteln einer Anzahl, einer Größe und eines Nutzungsstatus des mindestens einen Lagerraums, um einen Abschnittsraumstatus zu erzeugen, durch die Computervorrichtung (110);
bevor ein gelagertes Objekt in dem Schrankkörper (100,120) platziert wird, Ermitteln des Objektvolumens des gelagerten Objekts, Auswählen von einem der ungenutzten Lagerräume, die größer als das Objektvolumen des gelagerten Objekts sind, basierend auf dem Abschnittsraumstatus, Entriegeln der N+1 Schranktüren, wobei N eine positive ganze Zahl ist und der Anzahl der Türen entspricht, die den ausgewählten Lagerraum definieren, Fordern einer bestimmten Position zum Anordnen des abnehmbaren Trägers (410,510,710) an der Oberseite des Lagerraums basierend auf einer Höhe des gelagerten Objekts, um den Innenraum zu unterteilen, um den anderen Lagerraum zu erzeugen, durch die Computervorrichtung (110); und
wenn die N+1 Schranktüren (1-10) als geschlossen erkannt werden und das gelagerte Objekt in dem ausgewählten Lagerraum platziert ist und der neu angeordnete abnehmbare Träger (410,510,710) an der Oberseite des Lagerraums erkannt wurde, Berechnen und Ermitteln des Lagerraums, um den Abschnittsraumstatus zu aktualisieren und den jeweiligen Status der N+1 geschlossenen Schranktüren (1-10) auf Verriegelungsstatus umzuschalten, durch die Computervorrichtung (110).

7. Betriebsverfahren nach Anspruch 6, bei welchem der Schritt der Auswahl des Lagerraums umfasst:
Herausfiltern der ungenutzten Lagerräume, die größer sind als das Objektvolumen des gelagerten Objekts;
Auswählen des Lagerraums mit einem minimalen Volumen aus den herausgefilterten ungenutzten Lagerräumen; und
wenn der abnehmbare Träger (410,510,710) oberhalb des ausgewählten Lagerraums vorhanden ist, das Öffnen der obersten der N+1 Schranktüren untersagt wird.

8. Betriebsverfahren nach Anspruch 6, bei welchem jede Gruppe der Stützelemente (500) ein Paar von vertieften Schienen (511) und eine Eingriffsvorrichtung (512) umfasst, wobei vertiefte Öffnungen von dem Paar von vertieften Schienen (511) sich parallel gegenüberstehen, wobei eine Breite der vertieften Öffnung 2*M cm ist, wobei eine Dicke des abnehmbaren Trägers (510) M cm ist, wobei, wenn der abnehmbare Träger (510) vollständig in dem Paar von vertieften Schienen (511) platziert ist, die Eingriffsvorrichtung (512) mit dem abnehmbaren Träger (510) in Eingriff steht, wobei M eine positive ganze Zahl ist.

9. Betriebsverfahren nach Anspruch 6, bei welchem das Stützelement ein L-förmiges Stützelement (700) ist, wobei jede der zwei vertikalen Seiten des abnehmbaren Trägers (710) einen vertieften Teil aufweist, jeder der vertieften Teile so konfiguriert ist, dass er mit einem Verlängerungsteil an einer Unterseite des L-förmigen Stützelements (700) verbunden wird und der L-förmige abnehmbare Träger (710) entlang einer horizontalen Achse in das L-förmige Stützelement (700) eingeführt oder aus diesem herausgezogen wird.

10. Betriebsverfahren eines Schließfachsystems nach Anspruch 5, wobei das Betriebsverfahren in einer Umgebung angewendet wird, in der ein Schrankkörper und eine Computervorrichtung angeordnet sind, wobei der Schrankkörper einen Innenraum umfasst, und das Betriebsverfahren umfasst:
Bereitstellen eines abnehmbaren Trägers (410,510,710);
Anordnen von Schranktüren (1-10) an einer Frontplatte des Schrankkörpers (100,120), Anordnen von mindestens einer Gruppe von Stützelementen (500) an Innenseiten von zwei Seitenplatten der Schranktür (1-10), wobei jede der mindestens einen Gruppe von Stützelementen (500) ursprünglich nicht mit dem abnehmbaren Träger (410,510,710) versehen ist; **dadurch gekennzeichnet, dass** das Verfahren ferner umfasst
kontinuierliches Berechnen von mindestens einem Lagerraum, der noch übrig und verfügbar ist, basierend auf einem Raum, der von mindestens einem im Innenraum platzierten gelagerten Objekt eingenommen wird, und Ermitteln einer Anzahl und einer Größe des mindestens einen Lagerraums, um einen Abschnittsraumstatus zu generieren, durch die Computervorrichtung (110);
bevor ein gelagertes Objekt platziert wird, Ermitteln des Objektvolumens des gelagerten Objekts, Auswählen von einem der Lagerräume, die größer als das Objektvolumen des gelagerten Objekts sind, basierend auf dem Abschnittsraumstatus, und Öffnen der N Schranktüren, die mit dem ausgewählten Lagerraum korrespondieren, durch die Computervorrichtung (110), wobei N eine positive ganze Zahl ist; und
wenn der abnehmbare Träger (410,510,710) nicht an einem Boden des ausgewählten Lagerraums vorhanden ist, Fordern, dass der abnehmbare Träger (410,510,710) an dem Boden des ausgewählten Lagerraums angeordnet wird, und wenn die N Schranktüren geschlossen sind, Berechnen und Ermitteln des Lagerraums, um den Abschnittsraumstatus zu aktualisieren, durch die Computervorrichtung.

## Revendications

1. Système de casier apte à générer dynamiquement un espace de stockage en fonction d'un volume d'objet, et le système de casier comprenant :
un support détachable (410, 510, 710) ;
un corps (100, 120) d'armoire, comprenant un espace intérieur, un panneau avant et au moins un groupe d'éléments de support (500), dans lequel le panneau avant présente des portes (1-10) d'armoire, le au moins un groupe d'éléments de support (500) est disposé sur des côtés intérieurs de deux plaques latérales du corps (100, 120) d'armoire, et chacun du au moins un groupe d'éléments de support (500) est initialement dépourvu de support détachable (410, 510, 710) ; et
un dispositif informatique (110), connecté au corps d'armoire et **caractérisé en ce que** le dispositif informatique (110) comprend :
un module de calcul d'espace de section (111), configuré pour calculer au moins un espace de stockage formé en cloisonnant l'espace intérieur par le support détachable (410, 510, 710) sur la base d'un emplacement du support détachable (410, 510, 710), et détecter une quantité, une taille et un état d'utilisation du au moins un espace de stockage pour générer un état d'espace de section ;
un module de sélection d'espace de section (112), connecté au module de calcul d'espace de section, et configuré pour détecter le volume d'objet d'un objet stocké avant que l'objet stocké ne soit placé dans le corps d'armoire, sélectionner l'un des espaces de stockage inutilisés supérieur au volume d'objet de l'objet stocké en fonction de l'état d'espace de section, déverrouiller les N+1 portes d'armoire, dans lequel N est un entier positif et correspondant au nombre de portes définissant l'espace de stockage sélectionné, et guider vers un emplacement spécifié où disposer le support détachable (410, 510, 710) en haut de l'espace de stockage en fonction d'une hauteur de l'objet stocké pour cloisonner l'espace intérieur afin de générer l'espace de stockage différent ; et
un module de confirmation (113), connecté au module de calcul d'espace de section (111) et au module de sélection d'espace de section (112), dans lequel, lorsque les N+1 portes d'armoire sont détectées comme étant fermées et l'objet stocké est placé dans l'espace de stockage sélectionné et le support détachable (410, 510, 710) récemment disposé est détecté, le module de confirmation amène le module de calcul d'espace de section à calculer et à détecter l'espace de stockage pour mettre à jour l'état d'espace de section et changer des états des N+1 portes d'armoire fermées en états verrouillés.

2. Système de casier apte à générer dynamiquement un espace de stockage en fonction d'un volume d'objet selon la revendication 1, dans lequel lors de la sélection de l'espace de stockage, le module de sélection d'espace de section (112) élimine par filtrage les espaces de stockage inutilisés supérieurs au volume d'objet de l'objet stocké, sélectionne l'espace de stockage présentant un volume minimal parmi les espaces de stockage inutilisés filtrés, et lorsque le support détachable (410, 510, 710) existe au-dessus de l'espace de stockage sélectionné, le module de sélection d'espace de section (112) empêche l'ouverture de la plus haute des N+1 portes d'armoire.

3. Système de casier apte à générer dynamiquement un espace de stockage en fonction d'un volume d'objet selon la revendication 1, dans lequel chaque groupe des éléments de support (500) comprend une paire de glissières en creux (511) et un dispositif de mise en prise (512), des ouvertures en creux de la paire de glissières en creux (511) se font face en parallèle, une largeur de l'ouverture en creux mesure 2*M cm, une épaisseur du support détachable (510) mesure M cm, dans lequel lorsque le support détachable (510) est entièrement placé dans la paire de glissières en creux (511), le dispositif de mise en prise (512) vient en prise avec le support détachable (510), dans lequel M est un entier positif.

4. Système de casier apte à générer dynamiquement un espace de stockage en fonction d'un volume d'objet selon la revendication 1, dans lequel l'élément de support est un élément de support en L (700), chacun de deux côtés verticaux du support détachable (710) présente une partie évidée, chacune des parties évidées est configurée pour se connecter à une partie d'extension au niveau d'une partie inférieure de l'élément de support en L (700), et le support détachable en L (710) est inséré dans ou retiré de l'élément de support en L (700) le long d'un axe horizontal.

5. Système de casier apte à générer dynamiquement un espace de stockage en fonction d'un volume d'objet, et le système de casier comprenant :
un support détachable (410, 510, 710) ;
un corps (100, 120) d'armoire comprenant un espace intérieur, un panneau avant et au moins un groupe d'éléments de support (500), dans lequel le panneau avant présente des portes (1-10) d'armoire, le au moins un groupe d'éléments de support (500) est disposé sur des côtés intérieurs de deux plaques latérales du corps (100, 120) d'armoire, chacun du au moins un groupe d'éléments de support (500) est initialement dépourvu de support détachable (410, 510, 710) ; et
un dispositif informatique (110), connecté au corps (100, 120) d'armoire, et **caractérisé en ce que** le dispositif informatique (110) comprend :
un module de calcul d'espace de section (111), configuré pour calculer en continu au moins un espace de stockage restant et disponible, sur la base d'un espace occupé par au moins un objet stocké placé dans l'espace intérieur, et détecter une quantité et une taille du au moins un espace de stockage pour générer un état d'espace de section ;
un module de sélection d'espace de section (112), connecté au module de calcul d'espace de section (111), dans lequel, avant qu'un objet stocké ne soit placé, le module de sélection d'espace de section est configuré pour détecter le volume d'objet de l'objet stocké, sélectionner l'un des espaces de stockage supérieur au volume d'objet de l'objet stocké, en fonction de l'état d'espace de section, et ouvrir les N portes d'armoire correspondant à l'espace de stockage sélectionné, dans lequel N est un entier positif; et
un module de confirmation (113), connecté au module de calcul d'espace de section (111) et au module de sélection d'espace de section (112), dans lequel, lorsque le support détachable (410, 510, 710) n'existe pas sur un fond de l'espace de stockage sélectionné, le module de confirmation (113) guide la disposition du support détachable (410, 510, 710) sur le fond de l'espace de stockage sélectionné, et lorsque les N portes d'armoire sont fermées, le module de confirmation (113) amène le module de calcul d'espace de section à calculer et à détecter l'espace de stockage pour mettre à jour l'état d'espace de section.

6. Procédé de fonctionnement d'un système de casier selon l'une quelconque des revendications 1 à 4, dans lequel le procédé de fonctionnement est appliqué dans un environnement où un corps d'armoire et un dispositif informatique sont disposés, le corps d'armoire comprend un espace intérieur, le procédé de fonctionnement comprend :
la fourniture d'un support détachable (410, 510, 710) ;
la disposition de portes (1-10) d'armoire sur un panneau avant du corps (100, 120) d'armoire, la disposition d'au moins un groupe d'éléments de support (500) sur des côtés intérieurs de deux plaques latérales du corps (100, 120) d'armoire, dans lequel chacun du au moins un groupe d'éléments de support (500) est initialement dépourvu de support détachable (410, 510, 710) ; **caractérisé en ce que** le procédé comprend en outre
le calcul d'au moins un espace de stockage généré par le cloisonnement de l'espace intérieur par le support détachable (410, 510, 710) en fonction d'un emplacement du support détachable (410, 510, 710), et la détection d'une quantité, d'une taille et d'un état d'utilisation du au moins un espace de stockage pour générer un état d'espace de section, par le dispositif informatique (110) ;
avant qu'un objet stocké ne soit placé dans le corps (100, 120) d'armoire, la détection du volume d'objet de l'objet stocké, la sélection de l'un des espaces de stockage inutilisés supérieur au volume d'objet de l'objet stocké en fonction de l'état d'espace de section, le déverrouillage des N+1 portes d'armoire, dans lequel N est un entier positif et correspondant au nombre de portes définissant l'espace de stockage sélectionné, le guidage vers un emplacement spécifié où disposer le support détachable (410, 510, 710) en haut de l'espace de stockage pour cloisonner l'espace intérieur afin de générer l'espace de stockage différent en fonction d'une hauteur de l'objet stocké, par le dispositif informatique (110) ; et
quand les N+1 portes (1-10) d'armoire sont détectées comme étant fermées et l'objet stocké est placé dans l'espace de stockage sélectionné et le support détachable (410, 510, 710) récemment disposé en haut de l'espace de stockage est détecté, le calcul et la détection de l'espace de stockage pour mettre à jour l'état d'espace de section et le changement d'états des N+1 portes (1-10) d'armoire fermées en états verrouillés, par le dispositif informatique (110).

7. Procédé de fonctionnement selon la revendication 6, dans lequel l'étape de sélection de l'espace de stockage comprend :
l'élimination par filtrage des espaces de stockage inutilisés supérieurs au volume d'objet de l'objet stocké ;
la sélection de l'espace de stockage présentant un volume minimal parmi les espaces de stockage inutilisés filtrés ; et
lorsque le support détachable (410, 510, 710) existe au-dessus de l'espace de stockage sélectionné, le fait d'empêcher l'ouverture de la plus haute des N+1 portes d'armoire.

8. Procédé de fonctionnement selon la revendication 6, dans lequel chaque groupe des éléments de support (500) comprend une paire de glissières en creux (511) et un dispositif de mise en prise (512), des ouvertures en creux de la paire de glissières en creux (511) se font face en parallèle, une largeur de l'ouverture en creux mesure 2*M cm, une épaisseur du support détachable (510) mesure M cm, dans lequel lorsque le support détachable (510) est entièrement placé dans la paire de glissières en creux (511), le dispositif de mise en prise (512) vient en prise avec le support détachable (510), dans lequel M est un entier positif.

9. Procédé de fonctionnement selon la revendication 6, dans lequel l'élément de support est un élément de support en L (700), chacun de deux côtés verticaux du support détachable (710) présente une partie évidée, chacune des parties évidées est configurée pour se connecter à une partie d'extension au niveau d'une partie inférieure de l'élément de support en L (700), et le support détachable en L (710) est inséré dans ou retiré de l'élément de support en L (700) le long d'un axe horizontal.

10. Procédé de fonctionnement d'un système de casier selon la revendication 5, dans lequel le procédé de fonctionnement est appliqué dans un environnement où un corps d'armoire et un dispositif informatique sont disposés, le corps d'armoire comprend un espace intérieur, et le procédé de fonctionnement comprend :
la fourniture d'un support détachable (410, 510, 710) ;
la disposition de portes (1-10) d'armoire sur un panneau avant du corps (100, 120) d'armoire, la disposition d'au moins un groupe d'éléments de support (500) sur des côtés intérieurs de deux plaques latérales de la porte (1-10) d'armoire, dans lequel chacun du au moins un groupe d'éléments de support (500) est initialement dépourvu de support détachable (410, 510, 710) ; **caractérisé en ce que** le procédé comprend en outre
le calcul continu d'au moins un espace de stockage restant et disponible sur la base d'un espace occupé par au moins un objet stocké placé dans l'espace intérieur, et la détection d'une quantité et d'une taille du au moins un espace de stockage pour générer un état d'espace de section, par le dispositif informatique (110) ;
avant qu'un objet stocké ne soit placé, la détection du volume d'objet de l'objet stocké, la sélection de l'un des espaces de stockage supérieur au volume d'objet de l'objet stocké en fonction de l'état d'espace de section, et l'ouverture des N portes d'armoire correspondant à l'espace de stockage sélectionné, par le dispositif informatique (110), dans lequel N est un entier positif; et
lorsque le support détachable (410, 510, 710) n'existe pas sur un fond de l'espace de stockage sélectionné, le guidage pour disposer le support détachable (410, 510, 710) sur le fond de l'espace de stockage sélectionné, et lorsque les N portes d'armoire sont fermées, le calcul et la détection de l'espace de stockage pour mettre à jour l'état d'espace de section, par le dispositif informatique.
